# EUROPEAN PATENT APPLICATION

(11) **EP 2 977 892 A1**
(43) Date of publication of application: **27.01.2016**
(21) Application number: 15177414.8
(22) Date of filing: 17.07.2015
(51) Int. Cl.: G06F 9/44, G06F 9/45

(54) **MANAGING PARAMETER TYPES FOR GENERIC FUNCTIONS**

(30) Priority: 21.07.2014 US 201414337064
(71) Applicant: Xamarin Inc., San Francisco, CA 94111 (US)
(72) Inventor: VARGA, Zoltan, San Francisco, CA California 94111 (US)
(74) Representative: Carter, Stephen John

(57) **Abstract**

Embodiments are directed towards embodiments are directed towards managing parameter types for generic functions. During ahead-of-time (AOT) compilation of an application one or more generic functions may be encountered during compilation of the application. The AOT compiler may generate machine code for the encountered generic function. If parameter types associated with the encountered generic function are indefinite the AOT compiler may generate machine code that normalizes each parameter of the encountered generic function to conform to a shared version of the encountered generic function. Machine code may be generated for calling the shared version of the generic function with the normalized parameters. Machine code for calling the shared version of the generic function may be inserted and/or placed inside the machine code for the encountered generic function and inserted into a machine code version of the application.

## Description

### TECHNICAL FIELD

This invention relates generally to software application development, and more particularly, but not exclusively, to generating applications for hardware platforms that disallow runtime compilation.

### BACKGROUND

A highly competitive mobile application marketplace and the consumerization of information technology have put tremendous pressure on mobile application developers to deliver high quality mobile user experiences for both consumers and employees. Accordingly, it may be advantageous to employ modem cross-platform software development tools to enable application developers to develop applications. Further, modem programming languages may include features that allow for efficient and safer programming of applications. Some of the modem programming languages may employ one or more runtime compilation features for generating machine code at runtime on the target platform. However, some platforms, namely, some mobile computers (e.g., smartphones, tablets, or the like), game consoles, and so on, may restrict and/or disallow runtime compilation for security reasons. Thus, it is with respect to these and other considerations that these innovations are made.

### BRIEF DESCRIPTION OF THE DRAWINGS

Non-limiting and non-exhaustive embodiments of the present innovations are described with reference to the following drawings. In the drawings, like reference numerals refer to like parts throughout the various figures unless otherwise specified. For a better understanding of the present innovations, reference will be made to the following Description of the Various Embodiments, which is to be read in association with the accompanying drawings, wherein:
FIGURE 1 illustrates a system environment in which various embodiments may be implemented;
FIGURE 2 shows a schematic embodiment of a client computer;
FIGURE 3 illustrates a schematic embodiment of a network computer;
FIGURE 4 illustrates a system for application development that may employ generic type value sharing, in accordance with at least one of the various embodiments;
FIGURES 5A and 5B illustrate logical representations for compiling a source code file into machine code for deployment and execution on a target computer that disallows JIT code generation;
FIGURE 6 shows a logical illustration of a system for generating machine code for a generic function in accordance with at least one of the various embodiments;
FIGURE 7 shows an overview flowchart for a process for AOT compilation of generic functions in accordance with at least one of the various embodiments;
FIGURE 8 shows an overview flowchart for a process for executing machine code for AOT compiled generic functions in accordance with at least one of the various embodiments; and
FIGURE 9 shows an overview flowchart for a process for ahead-of-time (AOT) compiling for generic functions in accordance with at least one of the various embodiments.

### DESCRIPTION OF THE VARIOUS EMBODIMENTS

The present innovations now will be described more fully hereinafter with reference to the accompanying drawings, which form a part hereof, and which show, by way of illustration, specific embodiments by which the innovations may be practiced. These innovations may, however, be embodied in many different forms and should not be construed as limited to the embodiments set forth herein; rather, these embodiments are provided so that this disclosure will be thorough and complete, and will fully convey the various embodiments to at least those skilled in the art. Among other things, the present innovations may be embodied as methods, computers, or devices. Accordingly, the embodiments may take the form of an entirely hardware embodiment, an entirely software embodiment or an embodiment combining software and hardware aspects. The following detailed description is, therefore, not to be taken in a limiting sense.

Throughout the specification and claims, the following terms take the meanings explicitly associated herein, unless the context clearly dictates otherwise. The phrase "In one of the embodiments" or "in at least one of the various embodiments" as used herein does not necessarily refer to the same embodiment, though it may. Furthermore, the phrase "in another embodiment" or "in some embodiments" as used herein does not necessarily refer to a different embodiment, although it may. Thus, as described below, various embodiments may be readily combined, without departing from the scope or spirit of the innovations disclosed herein.

In addition, as used herein, the term "or" is an inclusive "or" operator, and is equivalent to the term "and/or," unless the context clearly dictates otherwise. The term "based on" is not exclusive and allows for being based on additional factors not described, unless the context clearly dictates otherwise. In addition, throughout the specification, the meaning of "a," "an," and "the" include plural references. The meaning of "in" includes "in" and "on."

The term "application" as used herein refers to a computing/software application designed to operate on a mobile computer. While the term mobile application is used throughout this description, one of ordinary skill in art the will appreciate that other type of applications may benefit from these innovations and are well within the scope and spirit of the disclosed innovations, including, but not limited to, web applications, web pages, "desktop" applications, or the like.

The term "application developer" as used herein refers to users that design and develop mobile applications. Mobile application developers may create and deploy mobile application to the mobile application testing platform.

The term "mobile computer" as used herein refers to networked computers and may include tablet computers, handheld computers, wearable computers, desktop computers, or the like. Mobile computers may also include notebook computers, desktop computers, microprocessor-based or programmable consumer electronics, network appliances, mobile telephones, smart telephones, pagers, radio frequency (RF) devices, infrared (IR) devices, Personal Digital Assistants (PDAs), televisions, integrated devices combining at least one of the preceding computers, or the like.

The terms "target platform," "target computer" as used herein refer to computers, such as, mobile computers, client computers, smart televisions, game consoles, set-top cable boxes (for televisions), smart home appliances, or the like, upon which applications are intended to be deployed. In at least one of the various embodiments, source code for an application may be compiled into machine code that is compatible for execution on one or more target computers. Different types of target computers may require compilers to generate machine code that is particular to the machine architecture of the particular target computers.

The terms "machine code," "machine code fragrment," and "machine code instructions" as used herein refers to symbols representing instructions that have been generated by compiling source code. Machine code comprises low level instructions designed for execution by a CPU complex of a target computer. Further, machine code may be instructions that may be executed directly on a target computer without alteration. Also, the data employed by an application may be included with the machine code. In some cases, a compiler and/or other application development program may supply or generate machine code that is not directly compiled from the source code.

The term "generic function" as used herein refers to functions programmed using generic programming techniques. Generic functions are a well-known in computer science. Generic functions, and generic programming in general, enables common sets of source code instructions to be applied using different parameter data types and/or return values by abstracting the parameter types of the functions. Accordingly, generic functions are functions that are defined without reference to specific parameter types. Typically, a placeholder symbol, such as, 'T' may be inserted in the generic function definition representing the parameter types in a function. If an application programmer uses a generic function, he or she will supply one or more particular parameter data in the source code. The particular parameter type may be resolved during execution of the application or during compilation of the application into machine code.

In addition to generic functions, computer programming languages that support generic programming may provide other generic entities, such as, generic classes, generic collections, generic methods, or the like. For brevity and clarity, the term "generic function" as used herein is intended to represent each of the other generic programming entities.

The term "parameter" as used herein refers to a variable and/or variable name that is included either explicitly or implicitly in the definition of a function. The precise syntax of parameters will vary depending on the particular programming language that is being employed. In at least one of the various embodiments, the parameters defined for a function may be employed by a compiler to generate an identifier and/or signature for the particular function. Accordingly, in some programming languages, function having the same name may be distinguishable because they are defined using different parameters.

The term "return value" as used herein refers to a variable that is passed out of function (e.g., returned) after it runs to completion. Note, depending on the programming language, return values for functions may be optional.

The term "parameter type" as used herein refers to the type of data type represented by a defined parameter. In at least one of the various embodiments, parameters are often defined to represent a specific/particular data type. Accordingly, a compiler may be arranged to confirm source code whether arguments having the correct/specified argument types are passed as arguments to functions. In generic programming, one or more parameter types may be passed to as arguments to generic functions. During runtime and/or compilation of the application source code, the parameter type arguments may be determined enabling the runtime environment and/or the compiler to generate a type specific machine code version of the generic function.

The term "indefinite parameter," or "indefinite parameter type" as used herein refer to parameter types and/or parameters are indefinite if the AOT compiler cannot determine enough information for generating specific machine code for executing the generic function using arguments that have the indefinite parameter type. In other words, the AOT compiler may unambiguously recognize the parameter type at compile time, but given the particular parameter type it cannot with certainty predict the value of one or more properties the arguments of that parameter type may possess at runtime time. For example, in at least one of the various embodiments, a parameter type such as a structure (e.g. Value Type in C#) may be defined in such that its runtime memory size may not be determinable at runtime. Accordingly, in this example, the AOT compiler may generate additional machine code instructions to dynamically allocate memory for such arguments at runtime.

In at least one of the various embodiments, the set of indefinite parameter types may vary depending on the computer programming language/platform that is being employed as well as the target computer that is targeted. Also, in at least one of the various embodiments, a given parameter type may not always be indefinite, the determination of whether a parameter type is indefinite occurs during compilation and is based on whether the compiler can determine sufficient information for generating an otherwise parameter type specific machine code version of the generic function.

The following briefly describes the embodiments of the invention in order to provide a basic understanding of some aspects of the invention. This brief description is not intended as an extensive overview. It is not intended to identify key or critical elements, or to delineate or otherwise narrow the scope. Its purpose is merely to present some concepts in a simplified form as a prelude to the more detailed description that is presented later.

Briefly stated, various embodiments are directed towards managing parameter types for generic functions. In at least one of the various embodiments, during ahead-of-time (AOT) compilation of a source version of an application the AOT compiler may encounter one or more generic functions. When a generic function may be encountered during compilation of the application into a machine code version of the application, the AOT compiler may be arranged to take further actions.

In at least one of the various embodiments, the AOT compiler may begin to a generate machine code of the encountered generic function. In at least one of the various embodiments, when one or more parameter types associated with the encountered generic function are determined to be indefinite the AOT compiler may take even further actions for managing the parameter types. In at least one of the various embodiments, determining when the parameter type is indefinite during compilation may include determining that a memory size of at least one argument to the encountered generic function is unknown at compile time.

In at least one of the various embodiments, the AOT compiler may generate a machine code fragment arranged to normalize each parameter of the encountered generic function to conform to a shared machine code version of the encountered generic function. In at least one of the various embodiments, generating machine code fragments that normalize each parameter of the encountered generic function may also include generating machine code fragments for dynamically allocating memory for at least one parameter. In at least one of the various embodiments, a machine code fragment may be generated for allocating memory to store a return value of the shared machine code version of the generic function.

Also, in at least one of the various embodiments, a machine code fragment may be generated for calling the shared machine code version of the generic function with the normalized parameters. Further, in at least one of the various embodiments, generating the machine code fragment for calling the shared machine code version of the generic function may include generating machine code fragments that provide runtime context information to the shared machine code version of the generic function.

In at least one of the various embodiments, the machine code version for the encountered generic function may be modified by inserting the machine code fragment that is arranged to call the shared machine code version of the generic function and the machine code fragment that is arrangement to normalize each parameter of the encountered generic function.

In at least one of the various embodiments, the modified machine code for the encountered generic function may be inserted into the machine code version of the application. In at least one of the various embodiments, inserting the modified machine code for the encountered generic function may further include inserting the modified machine code inline at a location in the machine code version of the application where the generic function is encountered.

In at least one of the various embodiments, a reusable copy the generated the machine code for the encountered generic function may be stored such that the reusable copy of the machine code version of the encountered generic function may be used if another instance of the encountered generic function has the same parameter types.

In at least one of the various embodiments, the machine code version of the application may be executed on a target computer. In at least one of the various embodiments, when the generic function may be encountered during execution and the generic function includes indefinite parameter types, the application may normalize one or more parameter arguments that may be passed to the generic function. In at least one of the various embodiments, the shared machine code version of the generic function may be called such that the normalized parameter arguments may be passed to the shared machine code version of the generic function. A return value of the shared machine code version of the generic function may be stored in a return value container. And, the return value may be provided to a calling process that may be executing the machine code version of the application.

### Illustrative Operating Environment

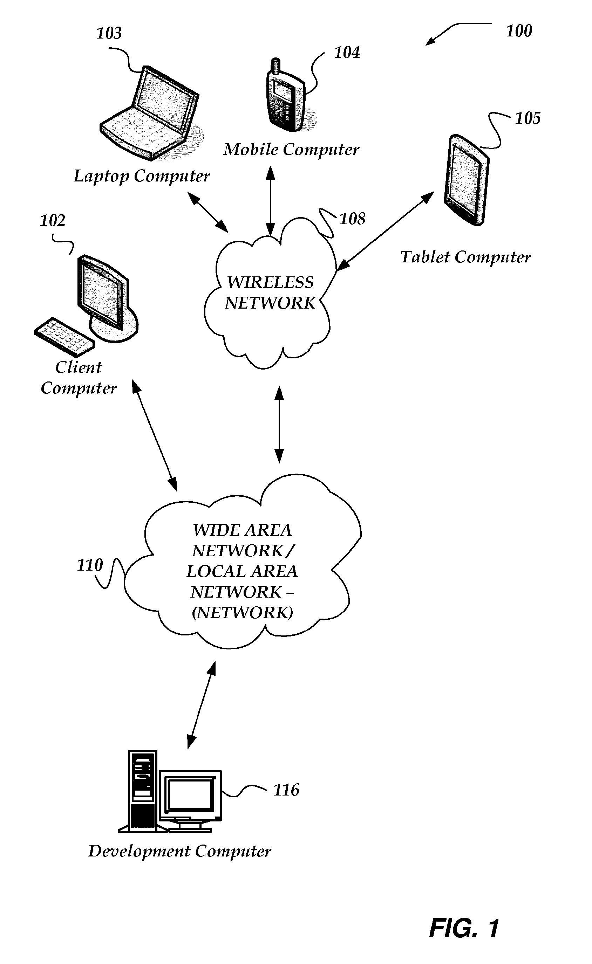

FIGURE 1 shows components of one embodiment of an environment in which embodiments of the invention may be practiced. Not all of the components may be required to practice the invention, and variations in the arrangement and type of the components may be made without departing from the spirit or scope of the invention. As shown, system 100 of FIGURE 1 includes local area networks (LANs)/ wide area networks (WANs) - (network) 110, wireless network 108, client computers 102-105, Development Computer 116, or the like.

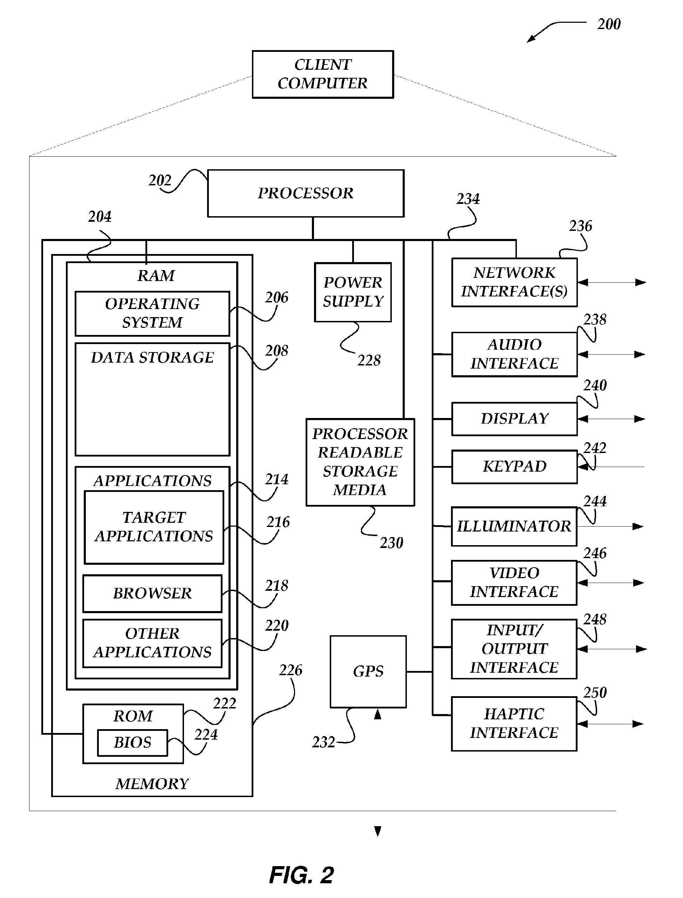

At least one embodiment of client computers 102-105 is described in more detail below in conjunction with FIGURE 2. In one embodiment, at least some of client computers 102-105 may operate over one or more wired and/or wireless networks, such as networks 108, and/or 110. Generally, client computers 102-105 may include virtually any computer capable of communicating over a network to send and receive information, perform various online activities, offline actions, or the like. In one embodiment, one or more of client computers 102-105 may be configured to operate within a business or other entity to perform a variety of services for the business or other entity. For example, client computers 102-105 may be configured to operate as a web server, firewall, client application, media player, mobile telephone, game console, desktop computer, or the like. However, client computers 102-105 are not constrained to these services and may also be employed, for example, as for end-user computing in other embodiments. It should be recognized that more or less client computers (as shown in FIGURE 1) may be included within a system such as described herein, and embodiments are therefore not constrained by the number or type of client computers employed.

Computers that may operate as client computer 102 may include computers that typically connect using a wired or wireless communications medium such as personal computers, multiprocessor systems, microprocessor-based or programmable electronic devices, network PCs, or the like. In some embodiments, client computers 102-105 may include virtually any portable computer capable of connecting to another computer and receiving information such as, laptop computer 103, mobile computer 104, tablet computers 105, or the like. However, portable computers are not so limited and may also include other portable computers such as cellular telephones, display pagers, radio frequency (RF) devices, infrared (IR) devices, Personal Digital Assistants (PDAs), handheld computers, wearable computers, integrated devices combining one or more of the preceding computers, or the like. As such, client computers 102-105 typically range widely in terms of capabilities and features. Moreover, client computers 102-105 may access various computing applications, including a browser, or other web-based application.

A web-enabled client computer may include a browser application that is configured to receive and to send web pages, web-based messages, and the like. The browser application may be configured to receive and display graphics, text, multimedia, and the like, employing virtually any web-based language, including a wireless application protocol messages (WAP), and the like. In one embodiment, the browser application is enabled to employ Handheld Device Markup Language (HDML), Wireless Markup Language (WML), WMLScript, JavaScript, Standard Generalized Markup Language (SGML), HyperText Markup Language (HTML), extensible Markup Language (XML), JavaScript Object Notation (JSON), or the like, to display and send a message. In one embodiment, a user of the client computer may employ the browser application to perform various activities over a network (online). However, another application may also be used to perform various online activities.

Client computers 102-105 also may include at least one other client application that is configured to receive and/or send content between another computer. The client application may include a capability to send and/or receive content, or the like. The client application may further provide information that identifies itself, including a type, capability, name, and the like. In one embodiment, client computers 102-105 may uniquely identify themselves through any of a variety of mechanisms, including an Internet Protocol (IP) address, a phone number, Mobile Identification Number (MIN), an electronic serial number (ESN), or other device identifier. Such information may be provided in a network packet, or the like, sent between other client computers, Development Computer 116, or other computers.

Client computers 102-105 may further be configured to include a client application that enables an end-user to log into an end-user account that may be managed by another computer, such as Development Computer 116, or the like. Such an end-user account, in one non-limiting example, may be configured to enable the end-user to manage one or more online activities, including in one non-limiting example, project management, software development, system administration, configuration management, search activities, social networking activities, browse various websites, communicate with other users, or the like.

Wireless network 108 is configured to couple client computers 103-105 and its components with network 110. Wireless network 108 may include any of a variety of wireless sub-networks that may further overlay stand-alone ad-hoc networks, and the like, to provide an infrastructure-oriented connection for client computers 103-105. Such sub-networks may include mesh networks, Wireless LAN (WLAN) networks, cellular networks, and the like. In one embodiment, the system may include more than one wireless network.

Wireless network 108 may further include an autonomous system of terminals, gateways, routers, and the like connected by wireless radio links, and the like. These connectors may be configured to move freely and randomly and organize themselves arbitrarily, such that the topology of wireless network 108 may change rapidly.

Wireless network 108 may further employ a plurality of access technologies including 2nd (2G), 3rd (3G), 4th (4G) 5th (5G) generation radio access for cellular systems, WLAN, Wireless Router (WR) mesh, and the like. Access technologies such as 2G, 3G, 4G, 5G, and future access networks may enable wide area coverage for mobile computers, such as client computers 103-105 with various degrees of mobility. In one non-limiting example, wireless network 108 may enable a radio connection through a radio network access such as Global System for Mobil communication (GSM), General Packet Radio Services (GPRS), Enhanced Data GSM Environment (EDGE), code division multiple access (CDMA), time division multiple access (TDMA), Wideband Code Division Multiple Access (WCDMA), High Speed Downlink Packet Access (HSDPA), Long Term Evolution (LTE), and the like. In essence, wireless network 108 may include virtually any wireless communication mechanism by which information may travel between client computers 103-105 and another computer, network, a cloud-based network, a cloud instance, or the like.

Network 110 is configured to couple network computers with other computers, including, Development Computer 116, client computers 102-105 through wireless network 108, or the like. Network 110 is enabled to employ any form of computer readable media for communicating information from one electronic device to another. Also, network 110 can include the Internet in addition to local area networks (LANs), wide area networks (WANs), direct connections, such as through a universal serial bus (USB) port, other forms of computer-readable media, or any combination thereof. On an interconnected set of LANs, including those based on differing architectures and protocols, a router acts as a link between LANs, enabling messages to be sent from one to another. In addition, communication links within LANs typically include twisted wire pair or coaxial cable, while communication links between networks may utilize analog telephone lines, full or fractional dedicated digital lines including T1 , T2, T3, and T4, and/or other carrier mechanisms including, for example, E-carriers, Integrated Services Digital Networks (ISDNs), Digital Subscriber Lines (DSLs), wireless links including satellite links, or other communications links known to those skilled in the art. Moreover, communication links may further employ any of a variety of digital signaling technologies, including without limit, for example, DS-0, DS-1, DS-2, DS-3, DS-4, OC-3, OC-12, OC-48, or the like. Furthermore, remote computers and other related electronic devices could be remotely connected to either LANs or WANs via a modem and temporary telephone link. In one embodiment, network 110 may be configured to transport information of an Internet Protocol (IP).

Additionally, communication media typically embodies computer readable instructions, data structures, program modules, or other transport mechanism and includes any information delivery media. By way of example, communication media includes wired media such as twisted pair, coaxial cable, fiber optics, wave guides, and other wired media and wireless media such as acoustic, RF, infrared, and other wireless media.

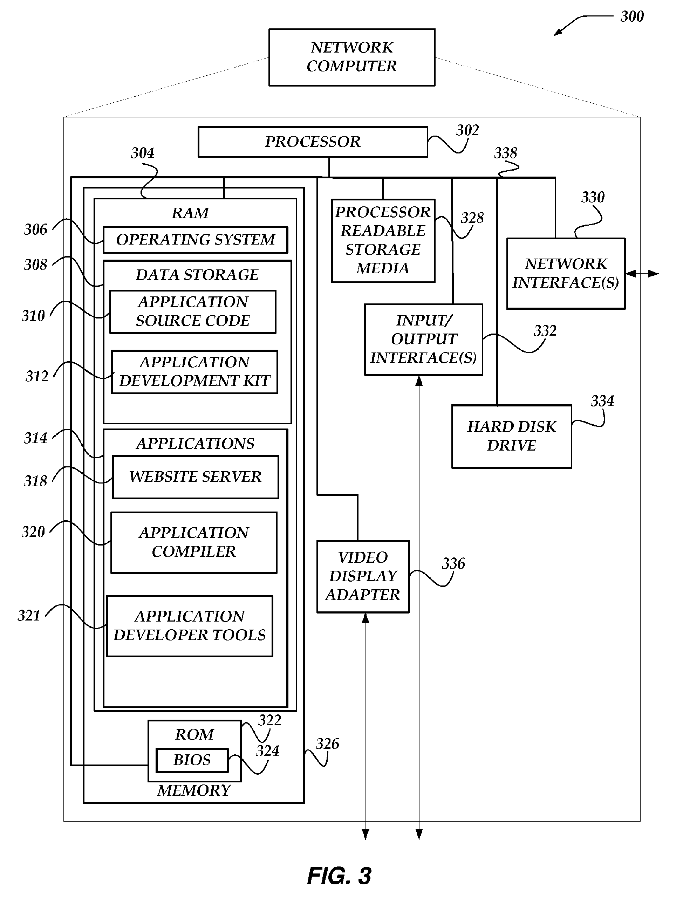

One embodiment of Development Computer 116 is described in more detail below in conjunction with FIGURE 3. Briefly, however, Development Computer 116 includes virtually any network computer capable of performing actions for generating software applications for a client computer.

Although FIGURE 1 illustrates Development Computer 116 as a single computer, the innovations and/or embodiments are not so limited. For example, one or more functions of Development Computer 116 may be distributed across one or more distinct network computers. Moreover, Development Computer 116 is not limited to a particular configuration such as the one shown in FIGURE 1. Thus, in one embodiment, Development Computer 116 may be implemented using a plurality of network computers and/or client computer. In other embodiments, development computer may operate as a plurality of network computers within a cluster architecture, a peer-to-peer architecture, or the like. Further, in at least one of the various embodiments, Development Computer 116 may be implemented using one or more cloud instances in one or more cloud networks.

### Illustrative Client Computer

FIGURE 2 shows one embodiment of client computer 200 that may be included in a system in accordance with at least one of the various embodiments. Client computer 200 may include many more or less components than those shown in FIGURE 2. However, the components shown are sufficient to disclose an illustrative embodiment for practicing the present invention. Client computer 200 may represent, for example, one embodiment of at least one of client computers 102-105 of FIGURE 1.

As shown in the figure, client computer 200 includes a processor 202 in communication with a mass memory 226 via a bus 234. In some embodiments, processor 202 may include one or more central processing units (CPU). Client computer 200 also includes a power supply 228, one or more network interfaces 236, an audio interface 238, a display 240, a keypad 242, an illuminator 244, a video interface 246, an input/output interface 248, a haptic interface 250, and a global positioning system (GPS) receiver 232.

Power supply 228 provides power to client computer 200. A rechargeable or non-rechargeable battery may be used to provide power. The power may also be provided by an external power source, such as an alternating current (AC) adapter or a powered docking cradle that supplements and/or recharges a battery.

Client computer 200 may optionally communicate with a base station (not shown), or directly with another computer. Network interface 236 includes circuitry for coupling client computer 200 to one or more networks, and is constructed for use with one or more communication protocols and technologies including, but not limited to, GSM, CDMA, TDMA, GPRS, EDGE, WCDMA, HSDPA, LTE, user datagram protocol (UDP), transmission control protocol/Internet protocol (TCP/IP), short message service (SMS), WAP, ultra wide band (UWB), IEEE 802.16 Worldwide Interoperability for Microwave Access (WiMax), session initiated protocol/real-time transport protocol (SIP/RTP), or any of a variety of other wireless communication protocols. Network interface 236 is sometimes known as a transceiver, transceiving device, or network interface card (NIC).

Audio interface 238 is arranged to produce and receive audio signals such as the sound of a human voice. For example, audio interface 238 may be coupled to a speaker and microphone (not shown) to enable telecommunication with others and/or generate an audio acknowledgement for some action.

Display 240 may be a liquid crystal display (LCD), gas plasma, light emitting diode (LED), organic LED, or any other type of display used with a computer. Display 240 may also include a touch sensitive screen arranged to receive input from an object such as a stylus or a digit from a human hand.

Keypad 242 may comprise any input device arranged to receive input from a user. For example, keypad 242 may include a push button numeric dial, or a keyboard. Keypad 242 may also include command buttons that are associated with selecting and sending images.

Illuminator 244 may provide a status indication and/or provide light. Illuminator 244 may remain active for specific periods of time or in response to events. For example, when illuminator 244 is active, it may backlight the buttons on keypad 242 and stay on while the client computer is powered. Also, illuminator 244 may backlight these buttons in various patterns when particular actions are performed, such as dialing another client computer. Illuminator 244 may also cause light sources positioned within a transparent or translucent case of the client computer to illuminate in response to actions.

Video interface 246 is arranged to capture video images, such as a still photo, a video segment, an infrared video, or the like. For example, video interface 246 may be coupled to a digital video camera, a web-camera, or the like. Video interface 246 may comprise a lens, an image sensor, and other electronics. Image sensors may include a complementary metal-oxide-semiconductor (CMOS) integrated circuit, charge-coupled device (CCD), or any other integrated circuit for sensing light.

Client computer 200 also comprises input/output interface 248 for communicating with external devices, such as a headset, or other input or output devices not shown in FIGURE 2. Input/output interface 248 can utilize one or more communication technologies, such as USB, infrared, Bluetooth™, or the like.

Haptic interface 250 is arranged to provide tactile feedback to a user of the client computer. For example, the haptic interface 250 may be employed to vibrate client computer 200 in a particular way when another user of a computer is calling. In some embodiments, haptic interface 250 may be optional.

Client computer 200 may also include GPS transceiver 232 to determine the physical coordinates of client computer 200 on the surface of the Earth. GPS transceiver 232, in some embodiments, may be optional. GPS transceiver 232 typically outputs a location as latitude and longitude values. However, GPS transceiver 232 can also employ other geo-positioning mechanisms, including, but not limited to, triangulation, assisted GPS (AGPS), Enhanced Observed Time Difference (E-OTD), Cell Identifier (CI), Service Area Identifier (SAI), Enhanced Timing Advance (ETA), Base Station Subsystem (BSS), or the like, to further determine the physical location of client computer 200 on the surface of the Earth. It is understood that under different conditions, GPS transceiver 232 can determine a physical location within millimeters for client computer 200; and in other cases, the determined physical location may be less precise, such as within a meter or significantly greater distances. In one embodiment, however, client computer 200 may through other components, provide other information that may be employed to determine a physical location of the computer, including for example, a Media Access Control (MAC) address, IP address, or the like.

Mass memory 226 includes a Random Access Memory (RAM) 204, a Read-only Memory (ROM) 222, and other storage means. Mass memory 226 illustrates an example of computer readable storage media (devices) for storage of information such as computer readable instructions, data structures, program modules or other data. Mass memory 226 stores a basic input/output system (BIOS) 224, or the like, for controlling low-level operation of client computer 200. The mass memory also stores an operating system 206 for controlling the operation of client computer 200. It will be appreciated that this component may include a general-purpose operating system such as a version of UNIX, or LINUXTM, or a specialized client communication operating system such as Microsoft Corporation's Windows Mobile™, Apple Corporation's iOS™, Google Corporation's Android™, or the like. The operating system may include, or interface with a Java virtual machine module that enables control of hardware components and/or operating system operations via Java application programs.

Mass memory 226 further includes one or more data storage 208, which can be utilized by client computer 200 to store, among other things, applications 214 and/or other data. For example, data storage 208 may also be employed to store information that describes various capabilities of client computer 200. The information may then be provided to another computer based on any of a variety of events, including being sent as part of a header during a communication, sent upon request, or the like. Data storage 208 may also be employed to store social networking information including address books, buddy lists, aliases, user profile information, user credentials, or the like. Further, data storage 208 may also store messages, web page content, or any of a variety of user generated content.

At least a portion of the information stored in data storage 208 may also be stored on another component of client computer 200, including, but not limited to processor readable storage media 230, a disk drive or other computer readable storage devices (not shown) within client computer 200.

Processor readable storage media 230 may include volatile, non-transitive, non-transitory, nonvolatile, removable, and non-removable media implemented in any method or technology for storage of information, such as computer- or processor-readable instructions, data structures, program modules, or other data. Examples of computer readable storage media include RAM, ROM, Electrically Erasable Programmable Read-only Memory (EEPROM), flash memory or other memory technology, Compact Disc Read-only Memory (CD-ROM), digital versatile disks (DVD) or other optical storage, magnetic cassettes, magnetic tape, magnetic disk storage or other magnetic storage devices, or any other physical medium which can be used to store the desired information and which can be accessed by a computer. Processor readable storage media 230 may also be referred to herein as computer readable storage media and/or computer readable storage device.

Applications 214 may include computer executable instructions which, when executed by client computer 200, transmit, receive, and/or otherwise process network data. Network data may include, but is not limited to, messages (e.g. SMS, Multimedia Message Service (MMS), instant message (IM), email, and/or other messages), audio, video, and enable telecommunication with another user of another client computer. Applications 214 may include, for example, a browser 218, and other applications 220. Further, applications 214 may include one or more target applications 216 generated by a development computer.

Browser 218 may include virtually any application configured to receive and display graphics, text, multimedia, messages, and the like, employing virtually any web based language. In one embodiment, the browser application is enabled to employ HDML, WML, WMLScript, JavaScript, SGML, HTML, XML, and the like, to display and send a message. However, any of a variety of other web-based programming languages may be employed. In one embodiment, browser 218 may enable a user of client computer 200 to communicate with another network computer, such as Development Computer 116 as shown in FIGURE 1.

Other applications 220 may include, but are not limited to, calendars, search programs, email clients, IM applications, SMS applications, voice over Internet Protocol (VOIP) applications, contact managers, task managers, transcoders, database programs, word processing programs, software development tools, security applications, spreadsheet programs, games, search programs, and so forth.

### Illustrative Network Computer

FIGURE 3 shows one embodiment of a network computer 300, according to one embodiment of the invention. Network computer 300 may include many more or less components than those shown. The components shown, however, are sufficient to disclose an illustrative embodiment for practicing the invention. Network computer 300 may be configured to operate as a server, client, peer, a host, cloud instance, or any other computer. Network computer 300 may represent, for example Development Computer 116, and/or other network computers.

Network computer 300 includes processor 302, processor readable storage media 328, network interface unit 330, an input/output interface 332, hard disk drive 334, video display adapter 336, and memory 326, all in communication with each other via bus 338. In some embodiments, processor 302 may include one or more central processing units.

As illustrated in FIGURE 3, network computer 300 also can communicate with the Internet, or other communication networks, via network interface unit 330, which is constructed for use with various communication protocols including the TCP/IP protocol. Network interface unit 330 is sometimes known as a transceiver, transceiving device, or network interface card (NIC).

Network computer 300 also comprises input/output interface 332 for communicating with external devices, such as a keyboard, or other input or output devices not shown in FIGURE 3. Input/output interface 332 can utilize one or more communication technologies, such as USB, infrared, NFC, BluetoothTM, or the like.

Memory 326 generally includes RAM 304, ROM 322 and one or more permanent mass storage devices, such as hard disk drive 334, tape drive, optical drive, and/or floppy disk drive. Memory 326 stores operating system 306 for controlling the operation of network computer 300. Any general-purpose operating system may be employed. Basic input/output system (BIOS) 324 is also provided for controlling the low-level operation of network computer 300.

Although illustrated separately, memory 326 may include processor readable storage media 328. Processor readable storage media 328 may be referred to and/or include computer readable media, computer readable storage media, and/or processor readable storage device. Processor readable storage media 328 may include volatile, nonvolatile, non-transitory, non-transitive, removable, and non-removable media implemented in any method or technology for storage of information, such as computer readable instructions, data structures, program modules, or other data. Examples of processor readable storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other media which can be used to store the desired information and which can be accessed by a computer.

Memory 326 further includes one or more data storage 308, which can be utilized by network computer 300 to store, among other things, applications 314 and/or other data. For example, data storage 308 may also be employed to store information that describes various capabilities of network computer 300. The information may then be provided to another computer based on any of a variety of events, including being sent as part of a header during a communication, sent upon request, or the like. Data storage 308 may also be employed to store messages, web page content, or the like. At least a portion of the information may also be stored on another component of network computer 300, including, but not limited to processor readable storage media 328, hard disk drive 334, or other computer readable storage medias (not shown) within network computer 300.

Data storage 308 may include a database, text, spreadsheet, folder, file, or the like, that may be configured to maintain and store user account identifiers, user profiles, email addresses, IM addresses, and/or other network addresses; or the like. Data storage 308 may further include program code, data, algorithms, and the like, for use by a processor, such as processor 302 to execute and perform actions. In one embodiment, at least some of data store 308 might also be stored on another component of network computer 300, including, but not limited to processor-readable storage media 328, hard disk drive 334, or the like.

Data storage 308 may include application source code 310. In at least one of the various embodiments, application source code 310 may include information, such as, one or more files, resources, projects, or the like, used for generating executable application. Also, in at least one of the various embodiments, data storage 308 may include, one or more of applications development kit 312 representing information and/or tools for generating executable application targeted for one or more target platforms.

Applications 314 may include computer executable instructions, which may be loaded into mass memory and run on operating system 306. Examples of application programs may include transcoders, schedulers, calendars, database programs, word processing programs, Hypertext Transfer Protocol (HTTP) programs, customizable user interface programs, IPSec applications, encryption programs, security programs, SMS message servers, IM message servers, email servers, account managers, and so forth. Applications 314 may also include, application compiler 320 for performing actions for generating executable applications for one or more target platforms.

Website server 318 may represent any of a variety of information and services that are configured to provide content, including messages, over a network to another computer. Thus, website server 318 can include, for example, a web server, a File Transfer Protocol (FTP) server, a database server, a content server, email server, or the like. Website server 318 may provide the content including messages over the network using any of a variety of formats including, but not limited to WAP, HDML, WML, SGML, HTML, XML, Compact HTML (cHTML), Extensible HTML (xHTML), or the like.

### Illustrative Architecture

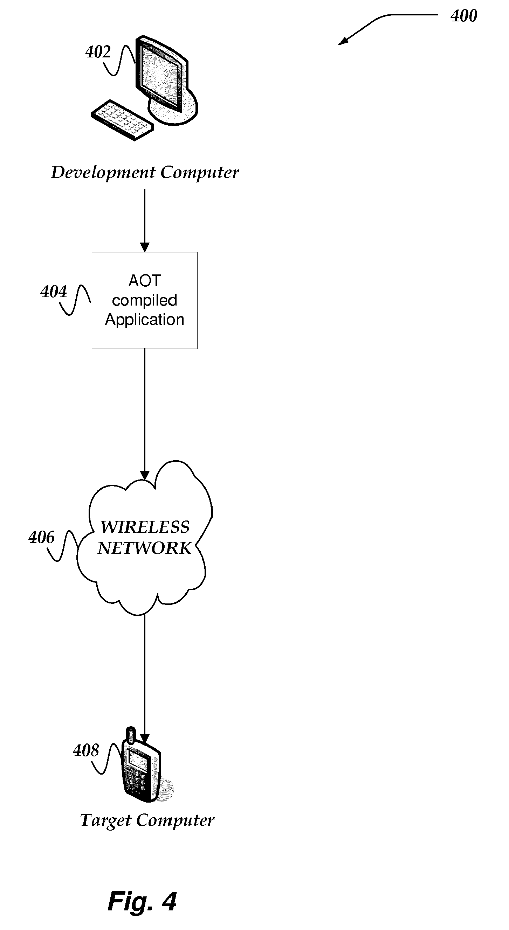

FIGURE 4 illustrates system 400 for application development that may employ generic type value sharing, in accordance with at least one of the various embodiments. In at least one of the various embodiments, system 400 comprises components for developing software applications targeted for one or more computers, such as, mobile computers, client computers, game consoles, set-top television boxes, smart televisions, media broadcasting appliances, or the like. In at least one of the various embodiments, system 400 may comprise one or more development computers, such as, development computer 402. In at least one of the various embodiments, development computer 402 may be a network computer or a client computer that is arranged to include tools and facilities that enable software programmers/application developers to create and generate applications for one or more target computers/devices. In at least one of the various embodiments, application developer tools 321 and/or application compiler 320 may be arranged to include one or more of the tools and facilities that enable software programmers to create and generate applications. For example, source code editors, compilers, linkers, software development kits, libraries, user interface design tools, or the like, or combination thereof.

In at least one of the various embodiments, application 404 represents an ahead-of-time (AOT) compiled software application that has been generated by a development computer, such as, development computer 402. In at least one of the various embodiments, for this example, application 404 may be considered an AOT compiled application, as opposed to a just-in-time (JIT) compiled application, because it is arranged such that it does not require runtime code-generation.

For example, applications developed using a computer language, or development platform, such as, Java/JVM (Java Virtual Machine), C#/.Net, or the like, may be required to perform some compilation and/or code generation while deployed on the target computer. In contrast, an AOT compiled version of applications built using JIT development platforms, such as application 404 may include machine code that has been compiled in advance to avoid JIT compiling on the target computer.

In at least one of the various embodiments, at least one reason for AOT compiling applications generated using JIT platforms includes enabling such applications to be deployed and executed on target computers that disallow runtime code generation and/or runtime compiling. Typically, target computers having such limitations may be mobile computers, client computers, smart televisions, game consoles, set-top cable boxes (for televisions), smart home appliances, or the like. Accordingly, if a target computer disallows JIT compilation and/or code generation, applications must be generated using AOT compilation before being deployed to such target computers.

In at least one of the various embodiments, often if an application is ready to be deployed to a target computer, it may be provided to the target computer over a network such as network 406. In at least one of the various embodiments, network 406 may be comprised of one or more networks, such as, network 110 or wireless network 108, or combination thereof.

In at least one of the various embodiments, target computer 408 represents one or more of the various kinds of computers that may be targeted by application 404. As discussed above, such computers may include, mobile computers, client computers, smart televisions, game consoles, set-top cable boxes (for televisions), smart home appliances, or the like.

In at least one of the various embodiments, target computer 408 may be provided application 404 over a network such as network 406. Also, in at least one of the various embodiments, target computer 408 may be provided application 404 using computer readable media, such as, USB thumb drives, memory cards, or the like. Also, for some embodiments, application 404 may be provided to an online application store and/or online application marketplace that enables one or more target computers to download and install the application over a network.

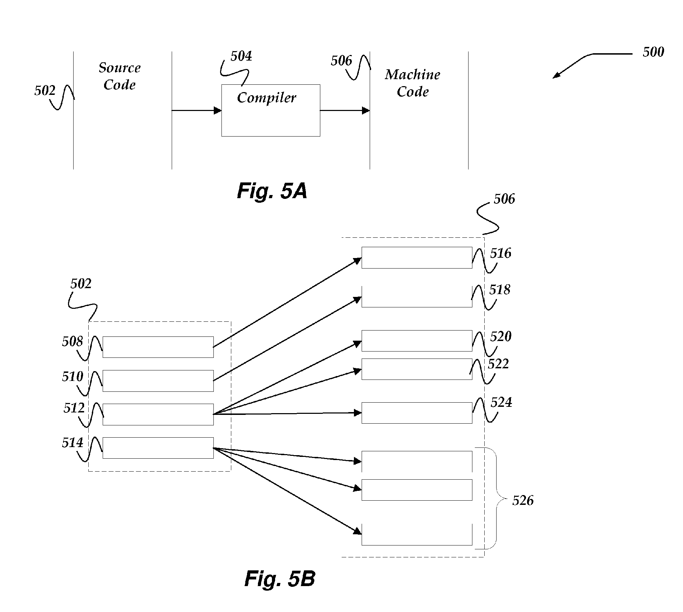

FIGURES 5A and 5B illustrate logical representations of the compiling a source code file into machine code for deployment and execution on a target computer that disallows JIT code generation.

FIGURE 5A shows a logical schematic for system 500 of generating machine code from a source code file using one or more software development applications/tools, such as a compiler, in accordance with at least one of the various embodiments. In at least one of the various embodiments, source code 502 may represent one or more files, documents, or resources, for a software application or one or more portions of a software application. In at least one of the various embodiments, source code 502 may include one or more files of human readable/editable source code composed in one or more computer programming languages. Source code 502 may include instructions for performing one or more specific actions (a computer program) on a processor device, such as, processor 202, processor 302, or the like. In at least one of the various embodiments, compiler 504 may represent one or more applications used for generating machine code 506 from provided source code, such as, source code 502. In at least one of the various embodiments, compiler 504 may be application compiler 320, application developer tools 321, or the like, or combination thereof.

In at least one of the various embodiments, machine code 506 may represent instructions that may be executed on a target computer. In at least one of the various embodiments, machine code 506 represents a collection of instructions and data for an application that may be installed and/or executed by a target computer. In at least one of the various embodiments, the instructions included in machine code 506 may include architecture/machine specific instructions for implementing/executing the instructions described in source code 502. Machine code targeted for target computers that have different machine/processor architectures may each represent the same source code instructions differently since they are based on instruction sets that may vary depending on the target computer's architecture. One of ordinary skill in the art will be familiar with the general process of compiling source code into machine code where same source code may produce different machine code depending on the architecture of the target computers.

FIGURE 5B shows a logical representation of compiling source code 502 into machine code 506 in accordance with at least one of the various embodiments. In at least one of the various embodiments, source code files may include various elements and/or features for describing the instructions for implementing an application, such as the definition of functions. One of ordinary skill in the art will be familiar with the variety of ways how functions may be represented in source code using one or more programing languages. In this example, source code 502 includes several functions, such as, source code function 508, source code function 510, source code generic function 512, and source code generic function 514. For this example, the particular contents and/or implementation of each function is not shown since one of ordinary skill in the art will be very familiar with how functions may be represented in source code.

In at least one of the various embodiments, some functions in source code 502 (e.g., function 512 and function 514) may be generic functions based on generic programming techniques supported by the computer programming language comprising the source code. Generic functions may be functions that are designed to receive parameter types as one or more of their parameters. This enables a JIT compiler to generate a parameter-type specific version of the generic function when the generic function is encountered during the execution of the application. In the absence of generic functions, programmers would employ or write different versions of the functions for different parameter types. Or, they might convert one or more of the arguments passed to a function a non-determinate type, such as, void* for C++ or C, Object for Java and C#, and so on.

At least one advantage of using generic functions is that a compiler may be arranged to detect more errors at compile time rather discovering them at runtime (e.g., incorrect runtime type conversions). Also, generic functions enable common operations to be generalized which can reduce programming errors. In at least one of the various embodiments, such common operations may include, comparisons, sorting, collections, collections manipulations, or the like, or combination thereof.

One of ordinary skill in the art will be familiar with the use and operation of generic functions (or generic methods). However, for convenience and clarity an example of a generic function defined using the computer language C# is included here:

```
        static void Swap<T>(ref T lhs, ref T rhs)
                    {
                          T temp;
                          temp = lhs;
                          lhs = rhs;
                          rhs = temp;
                    }
```

A common feature of generic functions for many languages is that they are defined using a placeholder for a parameter type. In the example above, 'T' is the place holder for a data type indicates that the function Swap is a generic function. Accordingly, in at least one of the various embodiments, if the generic function is to be employed in a program, the programmer will supply the parameter type information. For example, using the definition of Swap described above, a program may use it as follows:

```
        Swap<int> (ref a, ref b)
        Swap<float> (ref x, ref y)
        Swap<Window>( ref w1, ref w2)
```

Here, the data type placeholder has been replaced with specific data types (int, float, Window). At runtime, upon execution these functions will swap the values of their respective arguments. In some JIT environments, a runtime environment may generate a specific machine code function the generic function as they are encountered during the execution of the application on the target computer. The generic source code functions may be JIT compiled to into machine code functions that require parameters of the specific type (e.g., int, float, Window).

In at least one of the various embodiments, if the target computer restricts or otherwise does not allow or support JIT and/or runtime code generation, the generic function in the source code must be expanded and compiled into the correct machine code before the application is deployed to a target computer having JIT restrictions/limitations. Accordingly, in at least one of the various embodiments, compiler 504 may be arranged to generate machine code 506 such that multiple AOT compiled machine code versions of generic functions may be generated and inserted into the machine code version of the application before the machine code version of the application is deployed to a target computer.

In this example, source code function 508 corresponds to machine code function 516. Likewise, source code function 510 corresponds to machine code function 518. In this example, source code function 508 and source code function 510 may be regular functions (not generic) thus they may have a one to one correspondence with a machine code function. In contrast, in this example, source code function 512 and source code function 514 correspond to more than one machine code function. Accordingly, in this example source code function 512 corresponds to machine code function 520, machine code function 522, and machine code function 524. Likewise, source code function 514 may corresponds to machine code functions 526.

In at least one of the various embodiments, if the AOT compiler can determine the sufficient parameter type information for a generic function call at compile time it may generate one or more type specific machine code versions of the generic functions that correspond to the various parameter types that are encountered during compilation. For example, if the AOT compiler encounters a generic swap function defined for integer parameter types, it may generate a specific machine code version of the generic function dedicated to swapping integers. Likewise, if the AOT compiler encounters a generic swap function defined for using floating point numbers, it may generate a specific machine code version of the generic function dedicated to swapping floating point numbers, and so on.

In at least one of the various embodiments, in some cases, the AOT compiler may not have sufficient information to generate a type specific machine code function for a generic function call. In at least one of the various embodiments, the generic function may be defined in source code to use one or more parameter types where sufficient information is unavailable until actual runtime. At AOT compile time these parameter types may be considered indefinite in the sense that there is not enough information available at compile to generate a parameter type specific machine code version of the generic function.

On the other hand, if a JIT compiler is being used it would be able to determine sufficient information about the parameters and generate the correct machine code at runtime since the JIT compiler can generate the machine code for the generic function during runtime. In contrast, for target platforms that restrict JIT compiling/code generation, the AOT compiler must be able to compile generic functions that include indefinite parameter types ahead of time - in the absence of the all of information that may be available to the JIT compiler.

Accordingly, in at least one of the various embodiments, an AOT compiler, such as, application compiler 320, may be arranged to generate a shared machine code version of the generic function if it sufficient parameter type information may be unavailable during the AOT compile. In at least one of the various embodiments, the shared machine code version may be arranged to accept various parameter types and perform additional computations and actions to determine sufficient information for performing the task corresponding the generic function as described in the source code.

Further, in at least one of the various embodiments, compiler 504 may be arranged to generate machine code instructions for calling the encounter generic functions with the parameter types as defined in the source and within that machine code insert another call to the shared machine code version may be arranged to accept various parameter types and perform additional computations and actions to determine sufficient information for performing the task corresponding the generic function as described in the source code.

Note, in at least one of the various embodiments, a parameter type may be considered to be indefinite if the AOT compiler cannot determine enough information for generating specific machine code for executing the generic function using arguments that have the indefinite parameter type. In other words, the AOT compiler may unambiguously recognize the parameter type at compile time, but given the particular parameter type it cannot with certainty predict the value of one or more properties the arguments of that parameter type may possess at runtime time. For example, in at least one of the various embodiments, a parameter type such as a structure (e.g. Value Type in C#) may be defined in such that its runtime memory size may not be determinable at runtime. Accordingly, in this example, the AOT compiler may generate additional machine code instructions to dynamically allocate memory for such arguments at runtime.

In at least one of the various embodiments, the set of indefinite parameter types may vary depending on the computer programming language/platform that is being employed as well as the target computer that is targeted. Also, in at least one of the various embodiments, a given parameter type may not always be indefinite, the determination of whether a parameter type is indefinite occurs during compilation and is based on whether the compiler can determine sufficient information for generating an otherwise parameter type specific machine code version of the generic function.

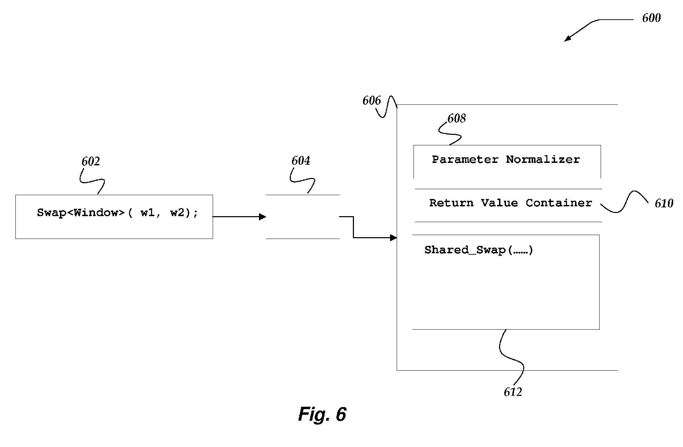

FIGURE 6 shows a logical illustration of system 600 representing generating machine code for a generic function in accordance with at least one of the various embodiments. In at least one of the various embodiments, during AOT compilation a generic functions in source code, such as, generic function 602 may be encountered. Accordingly, generic function 602 may be compiled into machine code by AOT compiler 604. For the purposes of this non-limiting example, AOT compiler 604 may be unable to determine sufficient information about data type Window during AOT compilation, Thus, for this example, parameter type Window will be considered an indefinite parameter type. Accordingly, in at least one of the various embodiments, compiler 604 may generate machine code version of the generic function 606 that has an indefinite parameter type such as Window. In at least one of the various embodiments, since machine code version 606 includes an indefinite parameter type the AOT compiler will generate additional machine code fragments that include instructions that normalize the parameter types for generic function 602 (e.g., parameter normalizer 610). Also, the AOT compiler may generate machine code for return value container 610 that is arranged to hold/receive any return values that may be returned to the caller of generic function 606/602.

Further, the AOT compiler may generate machine code for a shared machine code version of the generic function that accepts the normalized parameters during execution of the application. In at least one of the various embodiments, the shared machine code version of the generic function call is called from within the machine code generated for calling the generic function having the indefinite parameter types. Upon completion of the execution of the shared machine code version of the generic function control is returned back to the original machine code version of the generic function -- the version that includes the un-normalized indefinite parameters.

In at least one of the various embodiments, the machine code fragments for parameter normalizer 608 may include instructions for dynamically allocating memory for arguments having indefinite parameter types and return values required by the generic function. The instructions for the parameter normalizer 608 may be generated at compile time for dynamically allocating memory for parameter passing to the shared version of the generic function. Since the machine code for parameter normalizer 608 is generated during AOT compiling, the dynamic memory allocation and/or rearrangement of parameters -- without generating machine code instructions at runtime.

In at least one of the various embodiments, a shared machine code version of the swap function, shared generic function 612, may be arranged to receive a fixed set of well-known parameter types and parameters that will enable it to perform the desired operation, a swap for this example. In at least one of the various embodiments, parameter normalizer 608 may be generated to include machine code to arrange the arguments and/or parameters for the generic function such that they are compatible with shared generic function 612. Also, in at least one of the various embodiments, parameter normalizer 608 may be arranged to provide additional information to the shared generic function to for performing the expected operation. For example, such information may include runtime time context information, such as, caller identifiers, call stack information, or the like, or combination thereof.

Accordingly, in at least one of the various embodiments, given the normalized parameters and additional information arranged by the parameter normalizer, the shared machine code version of the generic function may perform the desired function/operation and provide the return values (if any) to the original generic function and then ultimately to the caller of the original generic function.

In at least one of the various embodiments, machine code 606 (the machine code version of the generic function) may be modified by inserting the machine code fragments for parameter normalization, return value container, and/or the call to the shared machine code version of the generic function.

Note, in at least one of the various embodiments, the shared machine code version of a generic function is required if the AOT compiler determines the parameter types used in the call to the generic function may be indefinite as specified in the source code. As discussed above, if the AOT compiler can determine sufficient information about the parameters types (e.g., the parameter types are not indefinite), the extra complexity of the parameter normalization and the shared generic functions are not required.

### Generalized Operation

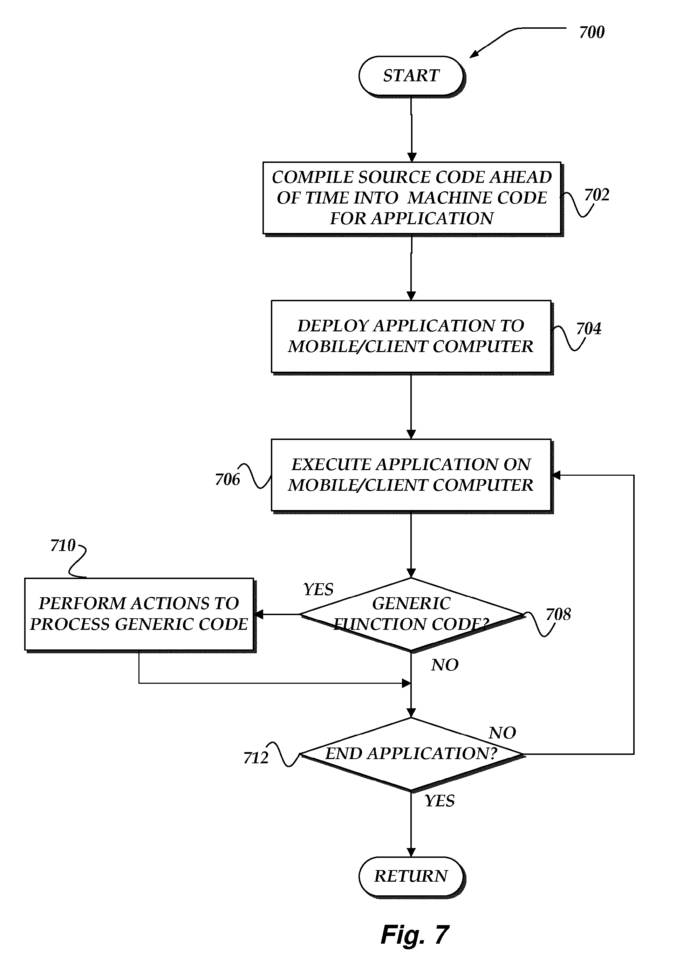

FIGURES 7-9 represent the generalized operations of generating application that may include generic function in accordance with at least one of the various embodiments. In at least one of the various embodiments, processes 700, 800, and 900 described in conjunction with FIGURES 7-9 may be implemented by and/or executed on a single network computer, such as network computer 300 of FIGURE 3. In other embodiments, these processes or portions of process thereof may be implemented by and/or executed on a plurality of network computers, such as network computer 300 of FIGURE 3. Further, in at least one of the various embodiments, the processes described in conjunction with FIGURES 7-9 may be operative in generating and/or execution of machine code versions of applications as described in conjunction with FIGURE 4 and FIGURE 5A and 5B.

FIGURE 7 shows an overview flowchart for process 700 for AOT compilation of generic functions in accordance with at least one of the various embodiments. After a start block, at block 702, in at least one of the various embodiments, source code for an application may be compiled into machine code. In particular, an AOT compiler may be employed to generate a machine code version of an application that is developed using JIT programming platforms that employ a runtime engine to generate some or all of the necessary machine code at the time of execution. As discussed above, since some target computers may prevent JIT code generation by disallowing executable data, the AOT compilers are used to generate machine code that can execute directly on the target computer in the absence of a runtime engine.

At block 704, in at least one of the various embodiments, the compiled application may be deployed to a target computer, such as, as mobile computer, or other client computer. One or more well-known methods may be employed to deploy and install the compiled application on the appropriate target computer. For example, the application may be provided over a network to an application marketplace hosted in a networked and/or cloud environment. Accordingly, for this example, a user may select and download the application to their target computer over a network. Additional well-known deployment and installation methods may be employed as well, such as, computer readable media, such as, USB thumb drives, memory cards, or the like.

At block 706, in at least one of the various embodiments, after being deployed to the target computer, the application may be executed, performing the actions and/or operations of the application. In at least one of the various embodiments, the application may be executed as directed by a user. Or, in at least one of the various embodiments, the application may be installed and configured to automatically execute at determined/configured time periods (e.g., execute at computer boot/startup, or the like).

At decision block 708, in at least one of the various embodiments, if the machine code for the compiled application includes generic function code, as such code is encountered during execution of the application control may flow to block 710; otherwise, control may flow to decision block 712. If the compiled application is generated from a JIT programming platform (e.g., C#/.Net) that includes generic function, the runtime engine for the JIT platform may be expected to dynamically generate the machine code for executing the intended generic function as it is encountered during execution. However, since the target computer for process 700 disallows JIT compilation, the generic function may require different actions.

At block 710, in at least one of the various embodiments, the specific actions for the encountered generic function code may be executed on the target computer. In at least one of the various embodiments, to execute the generic function, the compiled application may include one or more specific precompiled machine code versions of the generic function targeted for one or more different parameter types that may be passed to the encountered generic function. Also, in at least one of the various embodiments, if the generic function has parameter types that include properties that were indeterminable at compile time (e.g., indeterminate parameter types), a shared machine code version of the generic function may be executed. In at least one of the various embodiments, the shared machine code version of the generic function may also rely on parameter normalization instructions that may be inserted into the application's machine code during AOT compilation. Next, control may flow to decision block 712.

At block 712, in at least one of the various embodiments, if the applications ends, or is otherwise terminated, control may be returned to a calling process; otherwise, control may loop back to block 708 for continued execution of the application.

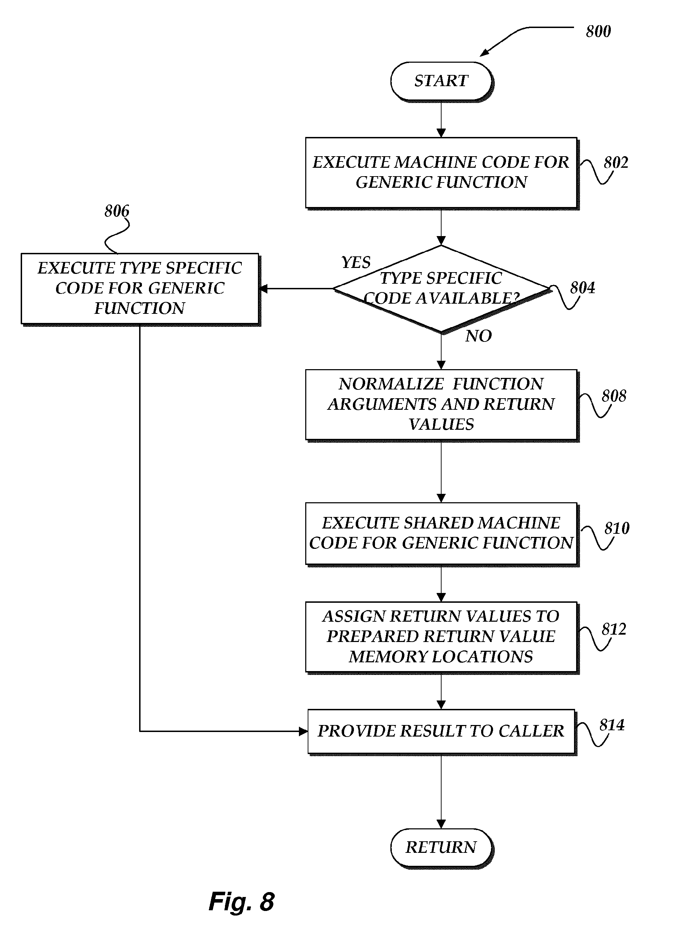

FIGURE 8 shows an overview flowchart for process 800 for executing machine code for AOT compiled generic functions in accordance with at least one of the various embodiments. After a start block, at block 802, in at least one of the various embodiments, machine code a generic function may be executed on a target computer.

In at least one of the various embodiments, machine code instructions that were generated during AOT compiling may be executed on the target computer. Accordingly, a processor device included in the target computer may execute the machine code instructions and perform the actions of the application. Accordingly, one or more machine code versions of generic functions may be encountered during the execution of the application.

At decision block 804, in at least one of the various embodiments, if a parameter type specific machine code version for the generic function is available, control may flow to block 806; otherwise, control may flow to block 808. In at least one of the various embodiments, during AOT compilation, one or more machine code versions for each kind of generic function may be generated and included in the application. These different versions may correspond to different parameter types and/or return value types as defined in the source code. During compilation of the application, the AOT compiler may generate a separate machine code version of for each generic function for each combination of parameter types and/or return types. Generating the different machine code versions of the generic functions during AOT compiling rather than at runtime enables the application to comply with restrictions on the target computer that may prevent runtime compiling and/or code-generation.

For example, if application programmer employed a generic function, such as, the Swap function discussed above, a separate machine code version of the Swap function would be included in the application for each definite parameter type, such as, integer (Int), floating point number (Float), or the like. Accordingly, during execution of the application, if the machine code for a Swap of two integers is encountered, the precompiled (AOT compiled) machine code version of Swap with integer parameters may be employed.

In at least one of the various embodiments, during AOT compile, if insufficient information about the parameter types is available such that generating a type specific machine code version of the generic function is precluded (e.g., indefinite parameter types), a modified machine code version of generic function that includes a call to shared machine code version of the generic function may be employed.

At block 806, in at least one of the various embodiments, since the AOT compiler was able to generate parameter type specific machine code for the generic function it may be executed directly. Control may then flow to block 814.

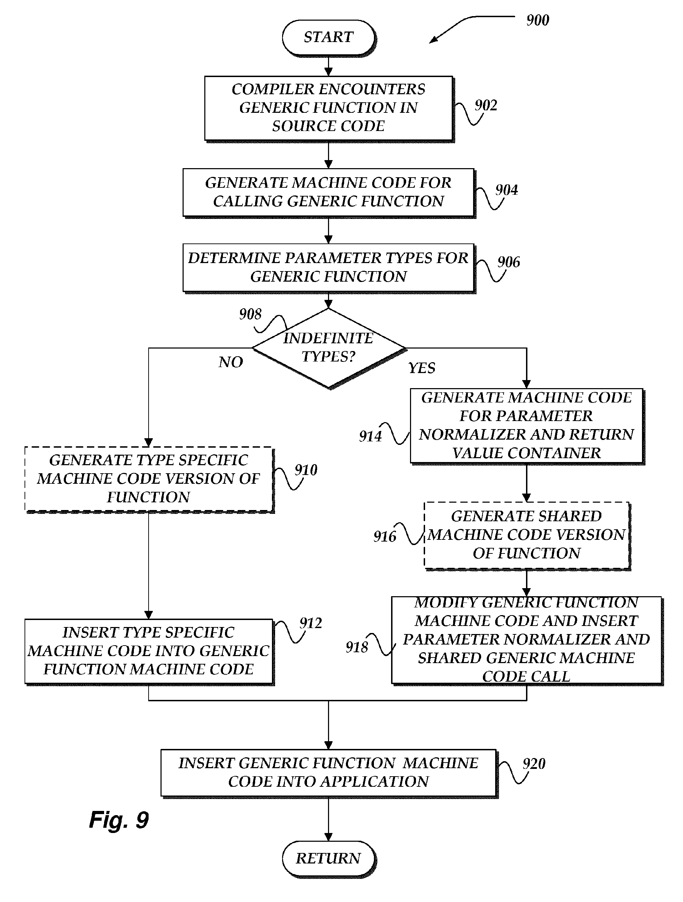

At block 808, in at least one of the various embodiments, the arguments and/or return values for the called generic function may be normalized using parameter normalization machine code. During AOT compilation, upon determination that there are indefinite parameter types, the AOT compiler may have generated and inserted machine code for normalizing the parameters and/or parameter information to conform to the parameter signature of a shared machine code version of the generic function. See, FIGURE 9. Accordingly, these normalization machine code fragments may be executed to prepare the arguments for passing to the shared machine code version of the generic function.

At block 810, in at least one of the various embodiments, the shared machine code for the generic function may be executed. In at least one of the various embodiments, the normalized arguments and any additional meta-data information may be passed to the shared function for execution.

At block 812, in at least one of the various embodiments, return values generated during the execution of the shared machine code may be prepared and assigned to their expected location using a return value container. In at least one of the various embodiments, in block 808, the normalization instructions may be arranged to conform the passing of arguments and/or return values to the calling convention and return value convention of the target computer. For example, if the return value convention of the target computer requires the return value of the generic function to be place on the top of the stack, the a return value container may include a placeholder at the top of the stack for the return value of the generic function (if any). Accordingly, in at least one of the various embodiments, at the completion of the execution of the shared machine code version of the generic function, the result of the operation is stored in return value container.

At block 814, in at least one of the various embodiments, the generated results, including the return values, may be provided to the caller of the generic function. Next, control may be returned to a calling process.

FIGURE 9 shows an overview flowchart for process 800 for ahead-of-time (AOT) compiling for generic functions in accordance with at least one of the various embodiments. After a start block, at block 902, in at least one of the various embodiments, an AOT compiler that is generating machine code for an application from source code may encounter source code representing a call to a generic function. As discussed above, source code may represent instructions for an application expressed in a higher level programming language. The AOT compiler takes the source code version of the application and generates a machine code version of the application for executing on one or more target computers. In at least one of the various embodiments, if the source code computer programming language supports generic functions the AOT compiler may encounter them during compilation if a programmer has used them in the application.

At block 904, in at least one of the various embodiments, the AOT compiler may generate machine code fragments for calling the generic function. In at least one of the various embodiments, this machine code fragment may include a call to particular generic function operation (e.g, swap, sort, max, min, or the like).

At block 906, in at least one of the various embodiments, the AOT compiler may determine the parameter types for the arguments that are intended for passing into the generic function during runtime on a target computer. In at least one of the various embodiments, the AOT compiler may be arranged to determine the parameter types for a generic function based on the source code. Accordingly, the AOT compiler may employ a parser that is configured to support the grammar and syntax of the computer programming language comprising the application source code. Each computer programming language that supports generic functions will have a well-known grammar and syntax that may be used to identify the occurrence of a generic function and the data types for its parameters (e.g., parameter types). The AOT compiler may be arranged to rely on the grammar and syntax of the source code language to determine the parameter types for each call to a generic function.

At decision block 908, in at least one of the various embodiments, if the generic function includes one or more indefinite parameter types, control may flow block 914; otherwise, control may flow to block 910.

In at least one of the various embodiments, for some parameter types the AOT compiler may be able to determine sufficient information about the parameters/arguments during compilation. In other cases, in at least one of the various embodiments, the source code language/platform may support parameter types that are indefinite, where it may be impossible for the AOT compiler to determine reliable information about some or all of the properties of one or more of the parameter types for the generic function during the AOT compilation. For example, if the source code is written in a computer programming language was designed to support runtime code generation, there may be some data types and/or situations, where the AOT compiler cannot determine sufficient type information about the parameters for the generic function.

At block 910, in at least one of the various embodiments, optionally, the AOT compiler may generate a parameter type specific machine code fragments for the generic function. This step may be optional because if the same generic function having the same parameters types and return value(s) has been encountered previously during the compile, the appropriate machine code fragments may already have been generated.

In at least one of the various embodiments, the AOT compiler may generate machine code fragment that perform the actions of the generic function. These machine code fragments may be arranged to match the parameter types defined in the source code. For example, referring again to the Swap function discussed above, the AOT compiler may generate at least three type specific versions of the swap function, one for each of the listed types (e.g., integer, floating point, objects/windows, or the like).

Accordingly, if the generic function call encountered during the compilation of the source code has the same parameter types (e.g., type signature) as a previously generated machine code version of the generic function, the AOT compiler may employ the previously generated machine code version rather than generating it.

At block 912, in at least one of the various embodiments, the machine code fragments for performing the generic function may be inserted into the machine code version of the generic function. Next, control may flow to block 920.

Alternatively, in at least one of the various embodiments, if the parameter types for the call to the generic function are indefinite, the AOT compiler may be unable to determine sufficient information about the call to the generic function during AOT compilation. In such cases, the AOT compiler may be arranged to performed additional actions as described below in blocks 914-918.

At block 914, in at least one of the various embodiments, the AOT compiler may generate machine code fragments that include instructions for parameter normalization and for preparing a return value container for placing return values. These fragments include instructions for dynamically allocating data structures for capturing the arguments and the return values that may be passed to the generic function during runtime execution. For example, if the memory size of the parameter type is unavailable during AOT compilation, the parameter normalization machine code may be arranged to dynamically allocate sufficient memory at runtime for holding the arguments for the indefinite parameters. Likewise, in at least one of the various embodiments, AOT compiler may generate machine code fragments for allocating sufficient memory for holding return values to be provided to the caller. Also, the parameter normalization machine code may be arranged to modify the location of the return values to conform to the return value passing protocol of the target computer.

In at least one of the various embodiments, the parameter normalization machine code may include instructions for generating data structures for containing parameter arguments and return values as well context information, such as, such as, caller identifiers, call stack information, or the like, or combination thereof, that may be associated with to the current runtime state of the application.

Note, the AOT compiler generates machine code fragments at compile time that enable the data structures for the parameters arguments, return values, and context information to be allocated at runtime. Accordingly, runtime code generation does not occur. During runtime (while the machine code version of the application is executing) dynamic memory allocation (if needed) and/or filling of data structures occurs rather than code generation. In at least one of the various embodiments, at compile time, the AOT compiler generates machine code fragments that may be executed at runtime to manipulate the parameters and return values of the generic function to conform to the parameter signature of a shared machine code version of the generic function.

At block 916, in at least one of the various embodiments, optionally, the AOT compiler may generate a shared machine code version of the generic function. This step is optional because the AOT compiler may have previously generated the shared machine code for this generic function.

In at least one of the various embodiments, a shared machine code version of the generic function may be generated. The shared generic function may be arranged to have a common parameter interface that may be the same for various parameter types and/or return value types. In at least one of the various embodiments, the shared machine code version of the generic function may rely on the previously generated parameter normalization machine code to ensure that the parameters are provided to it in the correct form. Accordingly, in at least one of the various embodiments, the shared machine code version may be constructed to receive a common set of parameters that are arranged by the parameter normalization machine code.

At block 918, in at least one of the various embodiments, the AOT compiler may modify the machine code version of the encountered generic function by inserting the machine code fragments for the parameter normalization, return value container, and the call to the shared machine code version of the generic function. Accordingly, in at least one of the various embodiments, the modified machine code instructions for the machine code of the generic function contain the machine code fragments for the parameter normalization, return value container, and the call to the shared machine code version for the generic function. This enables the AOT compiler to generate machine code at compilation time for handing the indefinite parameters types at runtime.

At block 920, in at least one of the various embodiments, the AOT compiler may insert the machine code instructions for the generic function into the machine code version of the application. In at least one of the various embodiments, the AOT compiler may insert machine code fragments to call the machine code version of the generic function or the modified machine code version of the generic function. Or, in at least one of the various embodiments, rather than inserting a call to the machine code versions of the generic function, the AOT compiler may insert the machine code versions of the generic function directly (inline) in the machine code version of the application.

In at least one of the various embodiments, the determination of whether to insert a call to a machine code version of the generic function or to insert it inline will be based on one or more optimization strategies employed by the AOT compiler. In at least one of the various embodiments, the particular optimization strategy in effect may be determined based on various factors, such as, configuration information provided to the AOT compiler, architecture of the target computer, or the like, or combination thereof. Next, control may be returned to a calling process.

It will be understood that each block of the flowchart illustration, and combinations of blocks in the flowchart illustration, can be implemented by computer program instructions. These program instructions may be provided to a processor to produce a machine, such that the instructions, which execute on the processor, create means for implementing the actions specified in the flowchart block or blocks. The computer program instructions may be executed by a processor to cause a series of operational steps to be performed by the processor to produce a computer-implemented process such that the instructions, which execute on the processor to provide steps for implementing the actions specified in the flowchart block or blocks. The computer program instructions may also cause at least some of the operational steps shown in the blocks of the flowchart to be performed in parallel. These program instructions may be stored on some type of machine readable storage media, such as processor readable non-transitive storage media, or the like. Moreover, some of the steps may also be performed across more than one processor, such as might arise in a multi-processor computer system. In addition, one or more blocks or combinations of blocks in the flowchart illustration may also be performed concurrently with other blocks or combinations of blocks, or even in a different sequence than illustrated without departing from the scope or spirit of the invention.

Accordingly, blocks of the flowchart illustration support combinations of means for performing the specified actions, combinations of steps for performing the specified actions and program instruction means for performing the specified actions. It will also be understood that each block of the flowchart illustration, and combinations of blocks in the flowchart illustration, can be implemented by special purpose hardware-based systems, which perform the specified actions or steps, or combinations of special purpose hardware and computer instructions. The foregoing example should not be construed as limiting and/or exhaustive, but rather, an illustrative use case to show an implementation of at least one of the various embodiments of the invention.

The following paragraph set our various aspects and optional features of the methods, systems and the like disclosed herein.
1. A method for generating an application using a computer that performs actions, including:
   responsive to encountering a generic function during compilation of a source code version of the application into a machine code version of the application, further actions are performed, including:
      generating a machine code version of the encountered generic function for the source code version of the application; and
      when at least one parameter type associated with the encountered generic function is determined to be indefinite, performing further actions, comprising:
         generating a machine code fragment that normalizes each parameter of the encountered generic function to conform to a shared machine code version of the encountered generic function;
         generating a machine code fragment that calls the shared machine code version of the generic function with the normalized parameters;
         modifying the machine code version of the encountered generic function by inserting both the machine code fragment for calling the shared machine code version of the generic function and the machine code fragment that normalizes each parameter of the encountered generic function inside; and
         inserting the modified machine code version of the encountered generic function into the machine code version of the application.
2. The method of Paragraph 1, wherein generating the machine code fragment that calls the shared machine code version of the generic function, performing further actions comprising, generating a machine code fragment for providing runtime context information to the shared machine code version of the generic function.
3. The method of Paragraph 1, wherein generating the machine code fragment that normalizes each parameter of the encountered generic function, performing further actions comprising, generating a machine code fragment for dynamically allocating memory for at least one parameter.
4. The method of Paragraph 1, further comprising, storing a reusable copy the generated machine code version for the encountered generic function, wherein the reusable copy of the generated machine code version for the encountered generic function is employed if another instance of the encountered generic function has the same parameter types.
5. The method of Paragraph 1, further comprising, generating a machine code fragment for allocating memory to store a return value of the machine code fragment that calls the shared machine code version of the generic function.
6. The method of Paragraph 1, wherein determining when the parameter type is indefinite during compilation, performing further actions comprising, determining that a memory size of at least one argument to the encounter generic function is unknown at compile time.
7. The method of Paragraph 1, wherein inserting the generated machine code version for the encountered generic function, further comprises, inserting the generated machine code inline at a location in the machine coder version of the application where the generic function is encountered.
8. The method of Paragraph 1, further comprising:
   executing the machine code version of the application on a target computer; and
   when the generic function is encounter during execution and the generic function includes indefinite parameter types, perform further actions, including:
      normalizing at least one parameter argument that is passed to the generic function;
      calling the shared machine code version of the generic function, wherein the at least one normalized parameter argument is passed to the shared machine code version of the generic function;
      storing a return value of the shared machine code version of the generic function in a return value container; and
      providing the return value container to a calling process that is executing the machine code version of the application.
9. A system for generating an application, comprising:
   a computer, including:
      a transceiver for communicating over the network;
      a memory for storing at least instructions; and
      a processor device that is operative to execute instructions that enable actions, including:
         responsive to encountering a generic function during compilation of a source code version of the application into a machine code version of the application, enabling further actions, including:
            generating a machine code version of the encountered generic function for the source code version of the application; and
            when at least one parameter type associated with the encountered generic function is determined to be indefinite, enabling further actions, comprising:
               generating a machine code fragment that normalizes each parameter of the encountered generic function to conform to a shared machine code version of the encountered generic function;
               generating a machine code fragment that calls the shared machine code version of the generic function with the normalized parameters;
               modifying the machine code version of the encountered generic function by inserting both the machine code fragment for calling the shared machine code version of the generic function and the machine code fragment that normalizes each parameter of the encountered generic function inside; and
               inserting the modified machine code version of the encountered generic function into the machine code version of the application; and
   a target computer, including:
      a transceiver for communicating over the network;
      a memory for storing at least instructions; and
      a processor device that is operative to execute instructions that enable actions, including:
      executing the machine code version of the application.
10. The system of Paragraph 9, wherein generating the machine code fragment that calls the shared machine code version of the generic function, performing further actions comprising, generating a machine code fragment for providing runtime context information to the shared machine code version of the generic function.
11. The system of Paragraph 9, wherein generating the machine code fragment that normalizes each parameter of the encountered generic function, performing further actions comprising, generating a machine code fragment for dynamically allocating memory for at least one parameter.
12. The system of Paragraph 9, wherein the computer processor device enables further actions comprising, storing a reusable copy the generated machine code version for the encountered generic function, wherein the reusable copy of the generated machine code version for the encountered generic function is employed if another instance of the encountered generic function has the same parameter types.
13. The system of Paragraph 9, wherein the computer processor device enables further actions comprising, generating a machine code fragment for allocating memory to store a return value of the machine code fragment that calls the shared machine code version of the generic function.
14. The system of Paragraph 9, wherein determining when the parameter type is indefinite during compilation, performing further actions comprising, determining that a memory size of at least one argument to the encounter generic function is unknown at compile time.
15. The system of Paragraph 9, wherein inserting the generated machine code version for the encountered generic function, further comprises, inserting the generated machine code inline at a location in the machine coder version of the application where the generic function is encountered.
16. The system of Paragraph 9, wherein the target computer processor device enables further actions comprising:
   executing the machine code version of the application; and
   when the generic function is encounter during execution and the generic function includes indefinite parameter types, enabling further actions, including:
      normalizing at least one parameter argument that is passed to the generic function;
      calling the shared machine code version of the generic function, wherein the at least one normalized parameter argument is passed to the shared machine code version of the generic function;
      storing a return value of the shared machine code version of the generic function in a return value container; and
      providing the return value container to a calling process that is executing the machine code version of the application.
17. A network computer for generating an application, comprising:
   a transceiver for communicating over the network;
   a memory for storing at least instructions; and
   a processor device that is operative to execute instructions that enable actions, including:
      responsive to encountering a generic function during compilation of a source code version of the application into a machine code version of the application, enabling further actions, including:
      generating a machine code version of the encountered generic function for the source code version of the application; and
      when at least one parameter type associated with the encountered generic function is determined to be indefinite, enabling further actions, comprising:
         generating a machine code fragment that normalizes each parameter of the encountered generic function to conform to a shared machine code version of the encountered generic function;
         generating a machine code fragment that calls the shared machine code version of the generic function with the normalized parameters;
         modifying the machine code version of the encountered generic function by inserting both the machine code fragment for calling the shared machine code version of the generic function and the machine code fragment that normalizes each parameter of the encountered generic function inside; and
         inserting the modified machine code version of the encountered generic function into the machine code version of the application.
18. The network computer of Paragraph 17, wherein generating the machine code fragment that calls the shared machine code version of the generic function, performing further actions comprising, generating a machine code fragment for providing runtime context information to the shared machine code version of the generic function.
19. The network computer of Paragraph 17, wherein generating the machine code fragment that normalizes each parameter of the encountered generic function, performing further actions comprising, generating a machine code fragment for dynamically allocating memory for at least one parameter.
20. The network computer of Paragraph 17, wherein the network computer processor device enables actions further comprising, storing a reusable copy the generated machine code version for the encountered generic function, wherein the reusable copy of the generated machine code version for the encountered generic function is employed if another instance of the encountered generic function has the same parameter types.
21. The network computer of Paragraph 17, wherein the network computer processor device enables actions further comprising, generating a machine code fragment for allocating memory to store a return value of the machine code fragment that calls the shared machine code version of the generic function.
22. The network computer of Paragraph 17, wherein determining when the parameter type is indefinite during compilation, performing further actions comprising, determining that a memory size of at least one argument to the encounter generic function is unknown at compile time.
23. The network computer of Paragraph 17, wherein inserting the generated machine code version for the encountered generic function, further comprises, inserting the generated machine code inline at a location in the machine coder version of the application where the generic function is encountered.
24. A processor readable non-transitive storage media that includes instructions for generating an application, wherein a computer that executes at least a portion of the instructions is enabled to perform actions, comprising:
   responsive to encountering a generic function during compilation of a source code version of the application into a machine code version of the application, enabling further actions, including:
   generating a machine code version of the encountered generic function for the source code version of the application; and
   when at least one parameter type associated with the encountered generic function is determined to be indefinite, enabling further actions, comprising:
      generating a machine code fragment that normalizes each parameter of the encountered generic function to conform to a shared machine code version of the encountered generic function;
      generating a machine code fragment that calls the shared machine code version of the generic function with the normalized parameters;
      modifying the machine code version of the encountered generic function by inserting both the machine code fragment for calling the shared machine code version of the generic function and the machine code fragment that normalizes each parameter of the encountered generic function inside; and
      inserting the modified machine code version of the encountered generic function into the machine code version of the application.
25. The media of Paragraph 24, wherein generating the machine code fragment that calls the shared machine code version of the generic function, performing further actions comprising, generating a machine code fragment for providing runtime context information to the shared machine code version of the generic function.
26. The media of Paragraph 24, wherein generating the machine code fragment that normalizes each parameter of the encountered generic function, performing further actions comprising, generating a machine code fragment for dynamically allocating memory for at least one parameter.
27. The media of Paragraph 24, further comprising, storing a reusable copy the generated machine code version for the encountered generic function, wherein the reusable copy of the generated machine code version for the encountered generic function is employed if another instance of the encountered generic function has the same parameter types.
28. The media of Paragraph 24, further comprising, generating a machine code fragment for allocating memory to store a return value of the machine code fragment that calls the shared machine code version of the generic function.
29. The media of Paragraph 24, wherein determining when the parameter type is indefinite during compilation, performing further actions comprising, determining that a memory size of at least one argument to the encounter generic function is unknown at compile time.
30. The media of Paragraph 24, further comprising:
   executing the machine code version of the application on a target computer; and
   when the generic function is encounter during execution and the generic function includes indefinite parameter types, enabling further actions, including:
      normalizing at least one parameter argument that is passed to the generic function;
      calling the shared machine code version of the generic function, wherein the at least one normalized parameter argument is passed to the shared machine code version of the generic function;
      storing a return value of the shared machine code version of the generic function in a return value container; and
      providing the return value container to a calling process that is executing the machine code version of the application.

## Claims

1. A method for generating an application using a computer that performs actions, including:
responsive to encountering a generic function during compilation of a source code version of the application into a machine code version of the application, further actions are performed, including:
generating a machine code version of the encountered generic function for the source code version of the application; and
when at least one parameter type associated with the encountered generic function is determined to be indefinite, performing further actions, comprising:
generating a machine code fragment that normalizes each parameter of the encountered generic function to conform to a shared machine code version of the encountered generic function;
generating a machine code fragment that calls the shared machine code version of the generic function with the normalized parameters;
modifying the machine code version of the encountered generic function by inserting both the machine code fragment for calling the shared machine code version of the generic function and the machine code fragment that normalizes each parameter of the encountered generic function inside; and
inserting the modified machine code version of the encountered generic function into the machine code version of the application.

2. A system for generating an application, comprising:
a computer, including:
a transceiver for communicating over the network;
a memory for storing at least instructions; and
a processor device that is operative to execute instructions that enable actions, including:
responsive to encountering a generic function during compilation of a source code version of the application into a machine code version of the application, enabling further actions, including:
generating a machine code version of the encountered generic function for the source code version of the application; and
when at least one parameter type associated with the encountered generic function is determined to be indefinite, enabling further actions, comprising:
generating a machine code fragment that normalizes each parameter of the encountered generic function to conform to a shared machine code version of the encountered generic function;
generating a machine code fragment that calls the shared machine code version of the generic function with the normalized parameters;
modifying the machine code version of the encountered generic function by inserting both the machine code fragment for calling the shared machine code version of the generic function and the machine code fragment that normalizes each parameter of the encountered generic function inside; and
inserting the modified machine code version of the encountered generic function into the machine code version of the application; and a target computer, including:
a transceiver for communicating over the network;
a memory for storing at least instructions; and
a processor device that is operative to execute instructions that enable actions, including:
executing the machine code version of the application.

3. The system of Claim 2, wherein generating the machine code fragment that calls the shared machine code version of the generic function, performing further actions comprising, generating a machine code fragment for providing runtime context information to the shared machine code version of the generic function.

4. The system of Claim 2, wherein generating the machine code fragment that normalizes each parameter of the encountered generic function, performing further actions comprising, generating a machine code fragment for dynamically allocating memory for at least one parameter.

5. The system of Claim 2, wherein the computer processor device enables further actions comprising, storing a reusable copy the generated machine code version for the encountered generic function, wherein the reusable copy of the generated machine code version for the encountered generic function is employed if another instance of the encountered generic function has the same parameter types.

6. The system of Claim 2, wherein the computer processor device enables further actions comprising, generating a machine code fragment for allocating memory to store a return value of the machine code fragment that calls the shared machine code version of the generic function.

7. The system of Claim 2, wherein determining when the parameter type is indefinite during compilation, performing further actions comprising, determining that a memory size of at least one argument to the encounter generic function is unknown at compile time.

8. The system of Claim 2, wherein inserting the generated machine code version for the encountered generic function, further comprises, inserting the generated machine code inline at a location in the machine coder version of the application where the generic function is encountered.

9. The system of Claim 2, wherein the target computer processor device enables further actions comprising:
executing the machine code version of the application; and
when the generic function is encounter during execution and the generic function includes indefinite parameter types, enabling further actions, including:
normalizing at least one parameter argument that is passed to the generic function;
calling the shared machine code version of the generic function, wherein the at least one normalized parameter argument is passed to the shared machine code version of the generic function;
storing a return value of the shared machine code version of the generic function in a return value container; and
providing the return value container to a calling process that is executing the machine code version of the application.

10. A network computer for generating an application, comprising:
a transceiver for communicating over the network;
a memory for storing at least instructions; and
a processor device that is operative to execute instructions that enable actions, including:
responsive to encountering a generic function during compilation of a source code version of the application into a machine code version of the application, enabling further actions, including:
generating a machine code version of the encountered generic function for the source code version of the application; and
when at least one parameter type associated with the encountered generic function is determined to be indefinite, enabling further actions, comprising:
generating a machine code fragment that normalizes each parameter of the encountered generic function to conform to a shared machine code version of the encountered generic function;
generating a machine code fragment that calls the shared machine code version of the generic function with the normalized parameters;
modifying the machine code version of the encountered generic function by inserting both the machine code fragment for calling the shared machine code version of the generic function and the machine code fragment that normalizes each parameter of the encountered generic function inside; and
inserting the modified machine code version of the encountered generic function into the machine code version of the application.

11. The network computer of Claim 10, wherein generating the machine code fragment that calls the shared machine code version of the generic function, performing further actions comprising, generating a machine code fragment for providing runtime context information to the shared machine code version of the generic function.

12. The network computer of Claim 10, wherein generating the machine code fragment that normalizes each parameter of the encountered generic function, performing further actions comprising, generating a machine code fragment for dynamically allocating memory for at least one parameter.

13. The network computer of Claim 10, wherein the network computer processor device enables actions further comprising, storing a reusable copy the generated machine code version for the encountered generic function, wherein the reusable copy of the generated machine code version for the encountered generic function is employed if another instance of the encountered generic function has the same parameter types.

14. The network computer of Claim 10, wherein the network computer processor device enables actions further comprising, generating a machine code fragment for allocating memory to store a return value of the machine code fragment that calls the shared machine code version of the generic function.

15. A processor readable non-transitive storage media that includes instructions for generating an application, wherein a computer that executes at least a portion of the instructions is enabled to perform actions, comprising:
responsive to encountering a generic function during compilation of a source code version of the application into a machine code version of the application, enabling further actions, including:
generating a machine code version of the encountered generic function for the source code version of the application; and
when at least one parameter type associated with the encountered generic function is determined to be indefinite, enabling further actions, comprising:
generating a machine code fragment that normalizes each parameter of the encountered generic function to conform to a shared machine code version of the encountered generic function;
generating a machine code fragment that calls the shared machine code version of the generic function with the normalized parameters;
modifying the machine code version of the encountered generic function by inserting both the machine code fragment for calling the shared machine code version of the generic function and the machine code fragment that normalizes each parameter of the encountered generic function inside; and
inserting the modified machine code version of the encountered generic function into the machine code version of the application.
